Europäisches Patentamt

European Patent Office

Office européen des brevets

(11) Veröffentlichungsnummer : **0 246 397 B1**

(19)

## (12) EUROPÄISCHE PATENTSCHRIFT

(45) Veröffentlichungstag der Patentschrift :
17.04.91 Patentblatt 91/16

(21) Anmeldenummer : 87102371.9

(22) Anmeldetag : 19.02.87

(51) Int. Cl.⁵ : **B60R 19/36**

(54) Nachgiebige Anordnung eines Stossfängers am Aufbau eines Kfz.

(30) Priorität : 21.05.86 DE 3617099

(43) Veröffentlichungstag der Anmeldung :
25.11.87 Patentblatt 87/48

(45) Bekanntmachung des Hinweises auf die
Patenterteilung :
17.04.91 Patentblatt 91/16

(84) Benannte Vertragsstaaten :
FR GB IT SE

(56) Entgegenhaltungen :
DE-A- 2 441 557
FR-A- 1 264 877
US-A- 4 399 887

(72) Erfinder : **Lehr, Werner**
**Fichtenstrasse 12**
**W-8034 Germering (DE)**
Erfinder : **Anzenhofer, Wolfgang**
**Fürstenfeldbrucker Strasse 26**
**W-8037 Olching (DE)**
Erfinder : **Spirk, Horst**
**Elilandstrasse 2**
**W-8000 München 90 (DE)**
Erfinder : **Bonenberger, Hartmut**
**Winterstrasse 39**
**W-8039 Puchheim (DE)**

(74) Vertreter : **Dexheimer, Rolf**
**Bayerische Motoren Werke**
**Aktiengesellschaft Postfach 40 02 40**
**Petuelring 130 - AJ-31**
**W-8000 München 40 (DE)**

(73) Patentinhaber : **Bayerische Motoren Werke**
**Aktiengesellschaft**
**Patentabteilung AJ-30 Postfach 40 02 40**
**Petuelring 130**
**W-8000 München 40 (DE)**

## Beschreibung

Die Erfindung bezieht sich auf eine nachgiebige Anordnung eines Stoßfängers am Aufbau eines Kraftfahrzeugs nach dem Oberbegriff des Patentanspruchs 1.

Bei einer bekannten derartigen Anordnung (FR-A-1 264 877) sind die den Stoßfänger mit dem Aufbau verbindenden Stützglieder durch massive Stangen gebildet, die mit dem Deformationsglied verschweißt sind. Dies hat nicht nur ein erhöhtes Gewicht zur Folge, sondern führt weiterhin dazu, daß schon bei kleineren Belastungen eine bleibende Verformung des Deformationsgliedes erfolgt und die Stoßfänger nicht in ihre ursprüngliche Lage zurückkehren.

Das Deformationsglied selbst wird von einem Rohr gebildet, das vom offenen Ende eines massiven, am Fahrzeugaufbau angeschweißten zylindrischen Gehäuse nach vorne absteht und beim Verformen mehr und mehr nach innen und zum Fahrzeugaufbau hin umgestülpt wird. Es ist sehr schwierig, mit einem sich in seinen Innenraum umstülpenden Rohr, das dabei auch einen kleineren Durchmesser einnimmt, ein Verformungsverhalten zu gewährleisten, das hinsichtlich der maximalen Verformungskraft gut beherrschbar ist. Auch nach kleineren Verformungen des Deformationsgliedes muß dieses zusammen mit der massiven Druckstange ausgewechselt werden, da beide miteinander verschweißt sind.

Es ist ferner bekannt (DE-A-24 41 557), einen sich regenerierenden Pralldämpfer über energieverzehrende Elemente an den Längsträgern eines Kraftfahrzeugs abzustützen. Die energieaufnehmenden Deformationsglieder sind jeweils von einem deformierbaren Wabenblock gebildet, der jeweils in dem Hohlraum des Längsträgers des Kraftfahrzeugs angeordnet ist. In dem Hohlraum ist das Deformationsglied mit seinem hinteren Bereich an einem den Längsträger durchdringenden Bolzen abgestützt. Bei dieser Bauart kann der Längsträger bereits in Mitleidenschaft gezogen werden, wenn das Deformationsglied verformt wird. Der deformierbare Wabenblock neigt nämlich dazu, sich beim Verformen quer zur Belastungsrichtung aufzuweiten, wodurch dann auch ein Aufweiten des Längsträgers in dem vor dem Bolzen liegenden Bereich erfolgt. Der Längsträger muß daher unter Umständen schon nach einem Belastungsfall, der im Bereich des Energieaufnahmevermögens des Deformationsgliedes liegt, ausgewechselt werden, da er nicht mehr seine Ausgangsform hat.

Der Erfindung liegt die Aufgabe zugrunde, eine Anordnung der eingangs angegebenen Gattung zu schaffen, die leicht und bei geringeren Stoßkräften kaum reparaturanfällig ist, während bei größeren Stoßkräften ein gut kontrollierbares Energieaufnahmevermögen bei gleichzeitiger Minimierung der Reparaturkosten gewährleistet werden soll.

Diese Aufgabe wird erfindungsgemäß durch die im Kennzeichen des Patentanspruches 1 angegebenen Merkmale gelöst. Die Pralldämpfer vermögen kleinere aus einem Aufprall auf ein Hindernis herrührende Belastungen federnd abzufangen, wobei das Zurückkehren in die Ausgangsposition (Regenerieren) gedämpft erfolgt. Bei kleineren Auffahrstößen erfolgt keinerlei Beschädigung des Fahrzeugaufbaus.

Bei etwas größeren Belastungen werden die Rollbleche unter Energieaufnahme bleibend verformt. Derartige Rollbleche sind einfach herzustellende Bauteile und hinsichtlich ihres Verformungsverhaltens gut beherrschbar, da sie beim Verformen einerseits an dem Pralldämpfer und andererseits an dem lösbar befestigten Gehäuse abrollen. Das Gehäuse bildet dabei sowohl für die Rollbleche als auch für den Pralldämpfer eine Führung. Da das Gehäuse lösbar am Aufbau befestigt ist, kann es auf einfache Weise durch ein neues Gehäuse ersetzt werden, wenn bei einem Aufprall mittlerer Stärke das alte Gehäuse schon Verformungen erlitten hat.

Bei noch höheren Aufprallgeschwindigkeiten kann zwar der betreffende Längsträger des Fahrzeugaufbaus in dessen vorderem Bereich auch schon deformiert werden, jedoch ist zuvor ein großer Teil der Aufprallenergie durch den Pralldämpfer und das erfindungsgemäß ausgebildete Deformationsglied absorbiert worden, so daß es häufig möglich sein wird, den Längsträger mit einer sogenannten Abschnittsreparatur wieder instand zu setzen, bei der nur ein Teil des Längsträgers ab einer geeigneten Trennstelle ersetzt werden muß.

Die Erfindung ist im folgenden anhand eines in der Zeichnung dargestellten Ausführungsbeispiels näher erläutert. Es zeigt

Fig. 1 eine Seitenansicht, teilweise im Schnitt, der neuen Stoßfängeranordnung ;

Fig. 2 eine Ansicht in Richtung der Pfeile II-II in Fig. 1 und

Fig. 3 einen Schnitt nach der Linie III-III in Fig. 1.

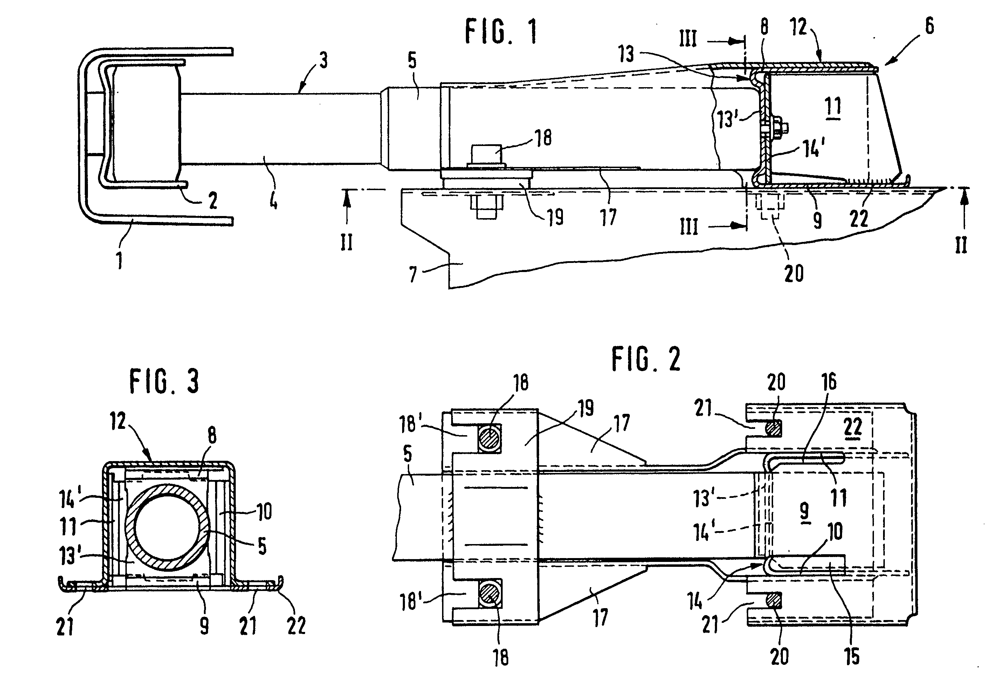

Der in Fig. 1 der Zeichnung im Querschnitt dargestellte Stoßfänger 1 ist über zwei geeignete Aufnahmeglieder 2 jeweils mit einem Pralldämpfer 3 verbunden, der in Fahrtrichtung verläuft und nach einer vorangegangenen Belastung sich selbst wieder regeneriert. Bei dem dargestellten Ausführungsbeispiel ist die vordere Verdrängerstange 4 mit dem Aufnahmeglied verbunden, während der Zylinder 5 sich an seinem rückwärtigen, dem Stoßfänger 1 abgewandten Ende an einem Deformationsglied 6 abstützt, das an einem Längsträger 7 des Fahrzeugaufbaus angeordnet ist.

Das Deformationsglied 6 umfaßt mehrere Rollbleche 8, 9, 10 und 11, die sich parallel zum Pralldämpfer längs der Innenwandung eines am Längsträger 7 befestigten Gehäuses 12 erstrecken. Sie sind an ihren dem Stoßfänger 1 abgewandten Enden mit dem Gehäuse 12 verbunden, während ihre anderen Enden am rückwärtigen Bereich des Zylinders 5 des Pralldämpfers 3 befestigt sind.

Die Befestigung und Ausbildung der Rollbleche kann, wie man insbesondere in Fig. 1 erkennt, in der Weise erfolgen, daß zwei Rollbleche 8, 9 bzw. 10, 11 jeweils von den Schenkeln eines U-förmigen Walkbleches 13 bzw. 14 gebildet sind, deren Steg 13' bzw. 14' mit dem Endbereich des Zylinders 5 des Pralldämpfers 3 verbunden ist. Bei der bevorzugten Ausführungsform sind zwei Walkbleche 13, 14 vorgesehen, deren Stege 13'und 14' sich rechtwinkelig überkreuzen. Für die Befestigung der beiden Stege 13' und 14' am Pralldämpfer 3 steht vom rückwärtigen Ende des Zylinders 5 ein Gewindebolzen ab, der die beiden Stege 13' und 14' durchdringt und auf den eine Befestigungsmutter aufgeschraubt ist.

Wie man insbesondere in Fig. 2 erkennt, ist das Rollblech 9 von einem Wandabschnitt des Gehäuses 12 gebildet, der von der restlichen unteren Wandung dieses Gehäuses durch seitliche Längsschlitze 15 und 16 getrennt ist.

Das Gehäuse 12 ist lösbar mit dem Längsträger 7 verbunden. Es nimmt nicht nur das Deformationsglied 6 sondern auch weitgehend den Zylinder 5 des Pralldämpfers 3 auf. Das Gehäuse 12 ist in seinem vorderen Abschnitt nach unten offen und umschließt den Zylinder 5 in diesem Bereich mit relativ geringem Abstand. An seinem vorderen Ende sind an dem Gehäuse 12 seitliche Befestigungslaschen 17 vorgesehen, um es dort mit dem Längsträger 7 verschrauben zu können. Die Befestigungsschrauben 18 durchsetzen weiterhin nach vorne offene Schlitze 18', die in einer sich quer erstreckenden und fest mit dem Zylinder 5 verbundenen Fixierlasche 19 ausgebildet sind. Im rückwärtigen Bereich ist das Gehäuse 12 über die in Fig. 1 angedeuteten Befestigungsschrauben 20 mit dem Längsträger 7 verbunden. Diese Schrauben durchsetzen nach vorne offene Schlitze 21 in einer unteren Grundplatte 22 des Gehäuses 12.

Im folgenden wird die Wirkungsweise der neuen Stoßfängeranordnung, insbesondere des Deformationsgliedes 6, beschrieben :

Bei Aufprallgeschwindigkeiten bis etwa 8 km/h absorbiert der Pralldämpfer 3 allein die gesamte Aufprallenergie. Er kann danach wieder seine Ausgangsstellung einnehmen.

Bei Aufprallgeschwindigkeiten über 8 km/h bis etwa 12 km/h wird die gesamte Aufprallenergie durch den Pralldämpfer 3 und das Deformationsglied 6 absorbiert. Die vordere Pralldämpferverankerung durch die Fixierlasche 19 löst sich dabei dank der nach vorne offenen Schlitze 18' von den Befestigungsschrauben 18. Gleichzeitig beginnen die Rollbleche 8, 9, 10 und 11 sich zu verformen. Um bei Beginn der Verformung keine Kraftspitzen zu erhalten, ist am vorderen Ende der Rollbleche der Rollradius bereits angeformt. Dieser Radius bleibt während des gesamten Verformungsvorgangs im wesentlichen konstant, da der noch unverformte Abschnitt eines jeden Rollblechs sich an der Gehäuseinnenwandung und der schon verformte Abschnitt sich am Zylinder 5 des Pralldämpfers 3 abstützt. Während des Verformens der Rollbleche 8, 9, 10 und 11 wird der Zylinder 5 des Pralldämpfers 3 im vorderen Abschnitt des Gehäuses 12 geführt. Auf diese Weise sind die Verformungskräfte gut beherrschbar, und zwar über den gesamten Verformungsbereich. Es ergibt sich ein im wesentlichen rechteckförmiges Kraft-Weg-Diagramm. Der Verformungsweg ist ebenfalls vergleichsweise groß, da das Pralldämpferende praktisch um die gesamte Länge eines Rollblechs hinten aus dem Gehäuse 12 herausgeschoben werden könnte. Das Einfahren des Pralldämpfers 3 und das Verformen der Rollbleche erfolgt in der Regel gleichzeitig.

Nach der Belastung fährt der Pralldämpfer 3 wieder in seine Ausgangsposition, wobei der Stoßfänger 1 die ursprüngliche Position nicht mehr erreicht, da das hintere Ende des Pralldämpfers 3 verlagert bleibt. Der Längsträger 7 bleibt bei den vorausgesetzten Aufprallgeschwindigkeiten unbeschädigt. Es muß lediglich das mit den Rollblechen 8, 9, 10 und 11 ausgestattete Gehäuse 12 ersetzt werden, um den ursprünglichen Zustand wieder vollständig herzustellen.

Bei Aufprallgeschwindigkeiten etwa über 12 km/h wird ein Teil der Aufprallenergie durch die erfindungsgemäße Stoßfängeranordnung absorbiert. Nach dem Einschub des Pralldämpfers 3 mit gleichzeitigem Abrollvorgang der Rollbleche 8, 9, 10 und 11 entkoppelt sich das Gehäuse 12 in der Weise vom Längsträger 7, daß nunmehr die durch die Befestigungsschrauben 18 gebildete Verbindung des Gehäuses 12 mit dem Längsträger 7 verbleibt. Dank der Schlitze 21 kann sich die am rückwärtigen Ende des Gehäuses 12 befindende Grundplatte 22 von den Befestigungsschrauben 20 lösen. Das Gehäuse 12 bildet dann keine die Steifigkeit des Längsträgers 7 wesentlich beeinflussende Versteifung mehr, so daß sich dieser Längsträger frei und mit einem vorgegebenen Verformungsverhalten von vorne beginnend deformieren kann.

Der Längsträger 7 kann dabei so ausgebildet werden, daß bei Aufprallgeschwindigkeiten von ca. 15-20 km/h der Längsträger nur in seinem vorderen Abschnitt deformiert wird, was die bereits weiter oben erwähnte, kostengünstigere Abschnittsreparatur ermöglicht.

Auch bei noch höheren Aufprallgeschwindigkeiten leistet die erfindungsgemäße Pralldämpferabstützung einen deutlichen Beitrag zum Abbau der gesamten Aufprallenergie, was zur Erhöhung des Insassenschutzes beiträgt. Bei solchen erhöhten Aufprallgeschwindigkeiten können die Pralldämpfer 3 u. U. nicht mehr schnell genug einfahren, sie sind also für sich allein wieder unwirksam. Die Rollbleche treten dann sofort in Aktion und verzehren Aufprallenergie. Der Gesamtdeformationsweg am Fahrzeug ist dann etwas verkürzt, was sich aber bei solchen Geschwindig kelten wieder günstig auf den Insassenschutz auswirkt.

## Ansprüche

1. Nachgiebige Anordnung eines Stoßfängers (1) am Aufbau (7) eines Kraftfahrzeugs, mit annähernd in Fahrtrichtung verlaufenden Stützgliedern, von denen jedes an einem Ende mit dem Stoßfänger (1) und am anderen Ende mit einem energieverzehrenden Deformationsglied (6) verbunden ist, das jeweils an einem am Aufbau (7) angeordneten Gehäuse (12) befestigt ist, dadurch gekennzeichnet, daß das Stützglied jeweils ein Pralldämpfer (3) ist und jedes Deformationsglied (6) mehrere Rollbleche (8, 9, 10, 11) umfaßt, die sich parallel zum Pralldämpfer (3) längs der Innenwandung eines am Aufbau (Längsträger 7) lösbar befestigten Gehäuses (12) erstrecken und an ihren dem Stoßfänger (1) abgewandten Enden mit dem Gehäuse (12) verbunden sind, während die anderen Enden am Pralldämpfer (3) befestigt sind.

2. Anordnung nach Anspruch 1, dadurch gekennzeichnet, daß zwei Rollbleche (8, 9 bzw. 10, 11) jeweils von den Schenkeln eines U-förmigen Walkbleches (13 ; 14) gebildet sind, dessen Steg (13', 14') mit dem Pralldämpfer (3) verbunden ist.

3. Anordnung nach Anspruch 2, dadurch gekennzeichnet, daß zwei Walkbleche (13, 14) vorgesehen sind, deren Stege (13' ; 14') sich rechtwinkelig überkreuzen.

4. Anordnung nach Anspruch 1, dadurch gekennzeichnet, daß ein Rollblech (9) von einem Wandabschnitt des Gehäuses (12) gebildet ist, der von der restlichen Wandung durch seitliche Längsschlitze (15, 16) getrennt ist.

5. Anordnung nach Anspruch 1, dadurch gekennzeichnet, daß das Gehäuse (12) lösbar mit einem längsträger (7) des Aufbaus verbunden ist.

6. Anordnung nach Anspruch 5, dadurch gekennzeichnet, daß das Gehäuse (12) den Pralldämpfer (3) aufnimmt.

7. Anordnung nach Anspruch 6, dadurch gekennzeichnet, daß das Gehäuse (12) mit dem längsträger (7) verschraubt ist, wobei die Schrauben-Durchtrittsöffnungen an dem vom Stoßfänger (1) abgewandten Ende des Gehäuses (12) einseitig zum Stoßfänger hin offene Schlitze 21 sind.

## Claims

1. A yieldable mounting of a bumper (1) on the frame (7) of a vehicle, comprising bracing elements extending approximately in the direction of travel, each element being connected at one end to the bumper (1) and at the other end to an energy-consuming deformation element (6) secured to a respective casing (12) disposed on the frame (7), characterised in that each bracing element is an impact absorber (3) and each deformation element (6) comprises a number of rolling plates (8, 9, 10, 11) extending parallel to the impact absorber (3) along the inner wall of a casing (12) releasably secured to the frame (side rail 7), the ends of the rolling plates remote from the bumper (1) being connected to the casing (12) whereas the other ends are connected to the impact absorber (3).

2. A mounting according to claim 1, characterised in that each pair of rolling plates (8, 9 and 10, 11) are formed by respective legs of a U-shaped pressure plate (13 ; 14) having a web (13', 14') connected to the impact absorber (3).

3. A mounting according to claim 2, characterised in that two pressure plates (13, 14) are provided and their webs (13' ; 14') intersect at right angles.

4. A mounting according to claim 1, characterised in that a rolling plate (9) is formed by a wall portion of the casing (12) and is separated from the rest of the wall by lateral slots (15, 16).

5. A mounting according to claim 1, characterised in that the casing (12) is releasably connected to the side rail (7) of the frame.

6. A mounting according to claim 5, characterised in that the casing (12) receives the impact absorber (3).

7. A mounting according to claim 6, characterised in that the casing (12) is screwed to the side rail (7), and the holes for the screws are slots (21) open at one end towards the bumper, the slots being formed on the end of casing (12) remote from the bumper (1).

## Revendications

1. Ensemble déformable de montage d'un pare-chocs (1) sur le châssis (7) d'un véhicule automobile, avec des éléments de support se développant approximativement dans le sens de la marche, parmi lesquels chacun d'eux est relié à une extrémité avec le pare-chocs (1) et à l'autre extrémité avec un élément de déformation (6) qui est respectivement fixé sur un carter placé sur le châssis (7), caractérisé en ce que l'élément de support est respectivement un amortisseur de chocs et chaque élément de déformation (6) comprend plusieurs tôles assemblées par glissement (8, 9, 10, 11) qui se développent parallèlement à l'amortisseur de chocs (3) le long de la paroi intérieure d'un carter (12) fixé détachable au châssis (longeron 7) et sont reliées au carter (12) à leurs extrémités éloignées du pare-chocs (1), alors que les autres extrémités sont fixées à l'amortisseur de chocs (3).

2. Dispositif selon la revendication 1, caractérisé en ce que deux tôles assemblées par glissement (8, 9 ou 10, 11) sont constituées respectivement par les branches d'une tôle foulée (13, 14) en forme de U, dont l'âme (13', 14') est reliée à l'amortisseur de chocs (3).

3. Dispositif selon la revendication 2, caractérisé en ce que deux tôles foulées (13, 14) sont prévues, dont les âmes (13', 14') se recouvrent et se croisent à angle droit.

4. Dispositif selon la revendication 1, caractérisé en ce qu'une tôle assemblée par glissement (9) est formée d'un tronçon de paroi du carter (12), séparé du reste de la paroi par des fentes longitudinales sur les côtés (15, 16).

5. Dispositif selon la revendication 1, caractérisé en ce que le carter (12) est relié amovible à un châssis (7) de la carosserie.

6. Dispositif selon la revendication 5, caractérisé en ce que le carter (12) absorbe l'amortisseur de chocs (3).

7. Dispositif selon la revendication 6, caractérisé en ce que le carter (12) est vissé au longeron (7), étant précisé que les ouvertures traversantes vissées sont constitués d'échancrures ouvertes à l'extrémité du carter (12) opposée à l'amortisseur de chocs (1) d'un seul côté par rapport à lui.

FIG. 1

FIG. 2

FIG. 3